# EUROPEAN PATENT APPLICATION

(11) **EP 4 604 075 A1**
(43) Date of publication of application: **20.08.2025**
(21) Application number: 24157955.6
(22) Date of filing: 15.02.2024
(51) Int. Cl.: G06V 10/60, G06V 10/774, G06V 10/82, G06V 10/80, G06V 20/56, G06V 20/64, G06V 20/70

(54) **DEVICE AND METHOD FOR GENERATING TRAINING DATA FOR AN OBJECT DETECTOR**

(71) Applicant: Robert Bosch GmbH, 70442 Stuttgart (DE)
(72) Inventor: Tatarchenko, Maxim, 10115 Berlin (DE); Schreiber, Marcel, 89231 Neu-Ulm (DE); Vertens, Johan, 72250 Freudenstadt (DE)

(57) **Abstract**

According to various embodiments, a method for generating training data for an object detector is described, comprising receiving a plurality of optical images of a scene, each camera showing the scene from a respective viewing direction of a plurality of different viewing directions, receiving a plurality of sensor data elements, each sensor data element including sensor data other than optical image data of the scene from a respective sensing direction of a plurality of different sensing directions, training a first neural radiance field using the plurality of optical images to generate, for each 3D point of the scene, a respective value of a predetermined feature, training a second neural radiance field using the plurality of sensor data elements to generate, for each 3D point of the scene, a respective sensor data value and generating training data elements for the object detector using the first and the second neural radiance field.

## Description

The present disclosure relates to devices and methods for generating training data (in particular 3D multimodal training data) for an object detector.

Object detection (especially in images) is a common task in the context of autonomous control of robotic devices such as robotic arms and autonomous vehicles. For example, a controller for a robotic arm should be able to recognize an object to be taken by the robotic arm (e.g. among several different objects) and an autonomous vehicle should be able to recognize other vehicles, pedestrians and stationary obstacles.

An approach for performing object detection, e.g. in autonomous driving, is using an object detector based on machine learning. This, however, typically requires labelled data elements, i.e. training sensor data elements (comprising RGB, Radar, LiDAR etc. data points) annotated with information that indicates the objects which are represented (e.g. shown) by the sensor data elements (in particular 3D labels in sequences of multimodal data elements).

Collecting large amounts of training data with such labelled training data elements, as required to train (typically data-intensive) object recognition models, can however be time-consuming, labour-intensive and costly in numerous applications such as autonomous driving and also industrial automation.

Therefore, efficient approaches for generating training data for object detectors are desirable.

The publication by B. Mildenhall, P. P. Srinivasan, M. Tancik, J. T. Barron, R. Ramamoorthi, and R. Ng, "Nerf: Representing scenes as neural radiance fields for view synthesis," 2020, in the following referred to as reference 1, has introduced neural radiance fields.

According to various embodiments, a method for generating training data for an object detector is provided comprising
- receiving a plurality of optical images of a scene, each camera showing the scene from a respective viewing direction of a plurality of different viewing directions;
- receiving a plurality of sensor data elements, each sensor data element including sensor data other than optical image data of the scene from a respective sensing direction of a plurality of different sensing directions;
- training a first neural radiance field (NeRF) using the plurality of optical images to generate, for each 3D point of the scene, a respective value of a predetermined feature;
- training a second neural radiance field using the plurality of sensor data elements to generate, for each 3D point of the scene, a respective sensor data value; and
- generating multiple training data elements for the object detector by, for each training data element, generating training input by means of the second neural radiance field and ground truth information for the training input by means of the first neural radiance field.

The method described above allows efficient generation of labelled sensor data elements (i.e. training data elements annotated with ground truth information) for an object detector. In particular, manual labelling or an off-the shelf or pre-trained object detector which provides 3D object boxes for the same sensor setup as the one for which the training data elements should be generated is not needed.

The training input is for example generated by means of the second neural radiance field by rendering a sensor data element using the sensor data values output by the second neural radiance filed (such as a NeRF as originally introduced in reference 1 can be used to render images).

In the following, various examples are given.

Example 1 is a method for generating training data for an object detector as described above.

Example 2 is the method of example 1, wherein training the first neural radiance field comprises determining values of the predetermined feature for pixels of the optical images and training the first neural radiance field to determine values of the predetermined feature for the pixels.

Feature values for pixels of optical images can be efficiently generated and thus allow a training of the first neural radiance field to accurately determine feature values for all 3D points of the scene.

Example 3 is the method of example 2, comprising determining the values of the predetermined feature for the pixel by means of a (further) machine learning model.

Depending on the type of the predetermined feature, various (pre-trained) machine learning models can be used, such as for example a segmentation model (such as Segment Anything), a CLIP model, a DINO model etc. for determining the values of the predetermined feature. Thus, powerful ML techniques which exist for determining features of optical images (i.e. for example photos) may be made use of via the first NeRF to generate training data elements for an object detector. Training the first NeRF can for example be done according to Lerf (Language embedded radiance fields).

Example 4 is the method of any one of examples 1 to 3, wherein the second neural radiance field is trained using the plurality of sensor data elements to generate, for each 3D point of the scene and for each of a plurality of sensor data types (e.g. optical image, radar, LiDAR, ultrasonic, thermal imaging, motion, sonar etc.) a respective sensor data value.

In other words, the second neural radiance field is a multi-modal neural radiance field. The training input of the training data elements can include sensor data of different ones of the sensor data types and of multiple ones of sensor data types. One of the sensor data type is for example optical image sensor data, i.e. for one of the modalities, the second neural radiance field may in particular be trained using the optical images.

Example 5 is the method of any one of examples 1 to 4, wherein the predetermined feature is a text embedding.

This allows assigning text (e.g. the designation of an object) to 3D locations of the scene. For example, the features may be queried (using a text query) to find all 3D locations that belong to a certain type of object. Thus, ground truth information may be generated for sensor data elements generated by the second neural radiance field for the scene.

Example 6 is a method for training an object detector comprising generating training data according to any one of examples 1 to 5 and training the object detector using the generated training data.

Example 7 is a method for controlling a technical system comprising training an object detector according to example 6, receiving sensor data of a scene in which the technical system is to be controlled, performing object detection using the object detector and controlling the technical system according to a result of the object detection.

For example other vehicles or pedestrians may be detected by an autonomous vehicle and the vehicle may be controlled to avoid collisions with the other vehicles or pedestrians.

Example 8 is a data processing device (e.g. a controller), configured to perform a method of any one of examples 1 to 7.

Example 9 is a computer program comprising instructions which, when executed by a computer, makes the computer perform a method according to any one of examples 1 to 7.

Example 10 is a computer-readable medium comprising instructions which, when executed by a computer, makes the computer perform a method according to any one of examples 1 to 7.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a vehicle.
- Figure 2: illustrates a multimodal NeRF for the usage with two sensors of different sensor types.
- Figure 3: illustrates a neural feature distillation NeRF (FD-NeRF).
- Figure 4: shows a flow diagram illustrating a method for generating training data for an object detector.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

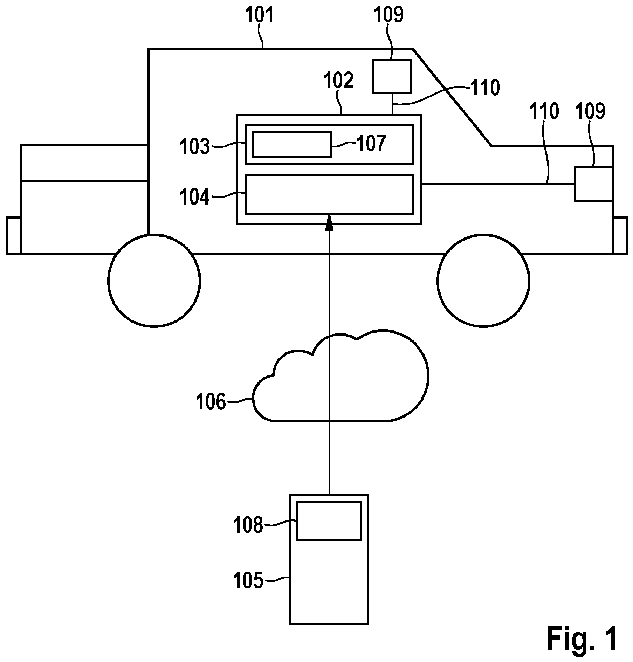

Figure 1 shows a vehicle 101.

In the example of Figure 1, a vehicle 101, for example a car or truck, is provided with a vehicle control device (also referred to as an electronic control unit, e.g. a control unit, e.g. an electronic control unit (ECU)) 102.

The vehicle control device 102 has data processing components, e.g. a processor (e.g. a CPU (central processing unit)) 103 and a memory 104 for storing control software 107, according to which the vehicle control device 102 operates, and data processed by the processor 103. The processor 103 executes the control software 107.

For example, the stored control software (computer program) has instructions which, when executed by the processor, cause the processor 103 to perform driver assistance functions (i.e. the function of an ADAS (Advanced Driver Assistance System)) or even autonomously control the vehicle (AD (Autonomous Driving)).

The control software 107 is transferred, for example, from a computer system 105 to the vehicle 101, e.g. via a network 106 (or also with the aid of a storage medium such as a memory card). This can also be done during operation (or at least when the vehicle 101 is with the user), as the control software 107 is updated to new versions over time, for example.

The control software 107 determines control actions for the vehicle (such as steering actions, braking actions, etc.) from input data that is available to it and that contains information about the environment or from which it derives information about the environment (such as by detecting other road users, e.g. other vehicles). These are, for example, sensor data from one or more sensor devices 109, such as from a camera of the vehicle 101, a RADAR sensor, a LiDAR sensor, an ultrasonic sensor, etc., which are connected to the vehicle control device 102 via a communication system 110 (e.g. a vehicle bus system such as CAN (Controller Area Network)).

The control software 107 may, for example, be trained using machine learning (ML), i.e., the control software 107 implements, for example, a neural network (NN) 108 that is trained based on training data, in this example from the computer system 105. The computer system 105 thus implements an ML training algorithm for training one (or more) ML model(s) 108.

Specifically, according to various embodiments, the control software 107 comprises an ML-based object detector, i.e. the ML model 108 (e.g., a neural network) is an ML model for recognizing objects (e.g., other vehicles, etc.) in sensor data. Such a model can be trained using supervised training, but this requires a large amount of labelled training data elements (i.e., training examples annotated with ground truth information). In particular, deep learning methods need a large amount of data for the training. In addition, as mentioned above, an autonomous system may be equipped with sensors of various sensor types, such as cameras, LiDAR sensors, radars sensors, and ultrasonic sensors. Generation of training data for all these modalities leads to the need for 3D annotations for multimodal data.

Despite manual labelling of sensor data elements which is inefficient and requires a high amount of human effort, auto-labelling methods exist, which for example make use of a pre-trained object detector in combination with refinement steps to generate labels. An example of an auto-labelling method is that
- a pre-trained object detector and tracker is used to first generate initial object trajectories, i.e. object boxes with an association over time
- a refinement step leverages the history and future measurements to refine the initial object trajectories. For example, a point cloud over the whole recording is used to first refine the object boxes, then the trajectories are optimized with the constant sized object boxes.

However, this kind of auto-labelling method relies on the performance of the used pre-trained object detector model. Therefore, the model is restricted to similar scenarios and the set of classes provided by the pre-trained object detector model, i.e. the manually labelled data it was trained on. Additionally, this kind of auto-labelling method detects objects on a per-frame basis and therefore does not process all observations at once to infer the most likely annotations that are consistent with the entire observed data. Moreover, as the object detector is trained on a dataset with a certain sensor setup, it assumes a similar setup at inference time, which is not guaranteed.

In view of the above, according to various embodiments, an approach is used which allows transferring features generated by a foundation models (e.g. image-based 2D semantic segmentation labels) into 3D for 3D auto-labelling for multi-modal data by employing a NeRF (Neural Radiance Field), referred to as first NeRF (FD-NeRF) herein. For example, this allows generating labels for sensor data elements which are generated with a second NeRF for one or more sensor modalities (i.e. sensor types). This means that the second NeRF may be a "multimodal" NeRF (MM-NeRF) generating and operating on multimodal neural implicit representations of scenes (e.g. a traffic scene). So, according to various embodiments, two NeRFs are trained in parallel in an independent manner in the sense that the gradient of one NeRF does not affect the other but, for example, densities predicted with the MM-NeRF are used for the training of the FD-NeRF.

More specifically, according to various embodiments, a (second) NeRF is trained to encode multimodal measurements (i.e. sensor data from multiple sensors of different sensor types) of the 3D space of a scene into a neural implicit representation and additionally a (first) NeRF is trained which can be seen as a feature embedding (or distillation) NeRF, which is trained on (and thus represents) and can generate features for points in 3D space like for example the semantic meaning of the points in 3D space (such as point belongs to a vehicle, point belongs to a pedestrian etc.).

For example, the feature embedding field (first NeRF) can be trained on language embeddings, such as generated by a CLIP (Contrastive Language-Image Pre-training) model.

Thus, based on text (i.e. language) queries of, for example, required class names, 3D relevance maps can be generated, i.e. the 3D space of the respective can be labelled by means of the first NeRF based on the text query. Thus, it is possible to generate labels, in particular for multi-modal data, in a language-driven open vocabulary setting.

In addition, language embeddings like CLIP features are independent from the sensor setup of the recordings, which should be labelled and CLIP models show a high robustness towards the application on unseen data, i.e. allow zero-shot classification. So, a pre-training on manually labelled data is not needed. Further, it is not required to perform a pre-training on the same task (for the same scene) using the same sensor data (for a later refinement).

Leveraging language embeddings such as CLIP features in the (first) NeRF model provides general knowledge, rather than a set of predefined object labels. The first NeRF model is trained once for a given scene and then it can be queried with text embeddings to get a relevance map in 3D for a requested class in the scene. This provides the flexibility to change the set of labels. In addition, it can be used to generate labels for rare classes.

It should be noted that the method for generating training data for an object detector described herein is not limited to the generation of 3D bounding boxes. Based on a relevance map in 3D it is possible to calculate 3D object boxes, but it can also be used to generate a label for each measurement point, e.g. generating a semantic label for each rendered LiDAR point.

Techniques provided by NeRFs may be used to further generate more diverse data, since the knowledge to generate the labels is distilled in the neural implicit representation of the first NeRF. Based on this neural implicit representation various characteristics of the scene (with respect to the arising sensor data) can be edited. For example, training data for the different modalities could be extracted based on changed mounting positions of the sensors or changed lighting and weather conditions.

As described above, according to various embodiments, neural radiance fields (NeRFs) are used to generate a 3D representation of the world based on raw sensor measurements. According to a NeRF, as originally introduced in reference 1, a set of images and corresponding camera poses of a scene is used to train a neural network. During training of the neural network, camera rays are sampled based on the camera pose and the resulting 3D positions in a volumetric space and the viewing directions are used as input to a multilayer perceptron. For each position and viewing direction the neural network is trained to predict a radiance, i.e. the RGB colour and a volume density.

Based on the ray geometry, a rendering function can be used to render the image using on the radiance prediction. This allows for a supervision with the images in the respective dataset (i.e. supervised learning of the neural network). NeRF, as originally introduced in reference 1 relies on static and object centric scenes but there are advancements, for example for the usage in natural light conditions or the usage in the setting of autonomous driving with a separate modelling of the static and dynamic world.

According to various embodiments, a multimodal NeRF is used (as the second NeRF) in the following also referred to as MM-NeRF. In contrast to the NeRF as originally introduced in reference 1, the MM-NeRF is not only trained based on RGB images, but on data of multiple sensor modalities, such as camera images, LiDAR and radar data. The MM-NeRF thus learns a joint implicit representation and allows the generation of multimodal sensor measurements.

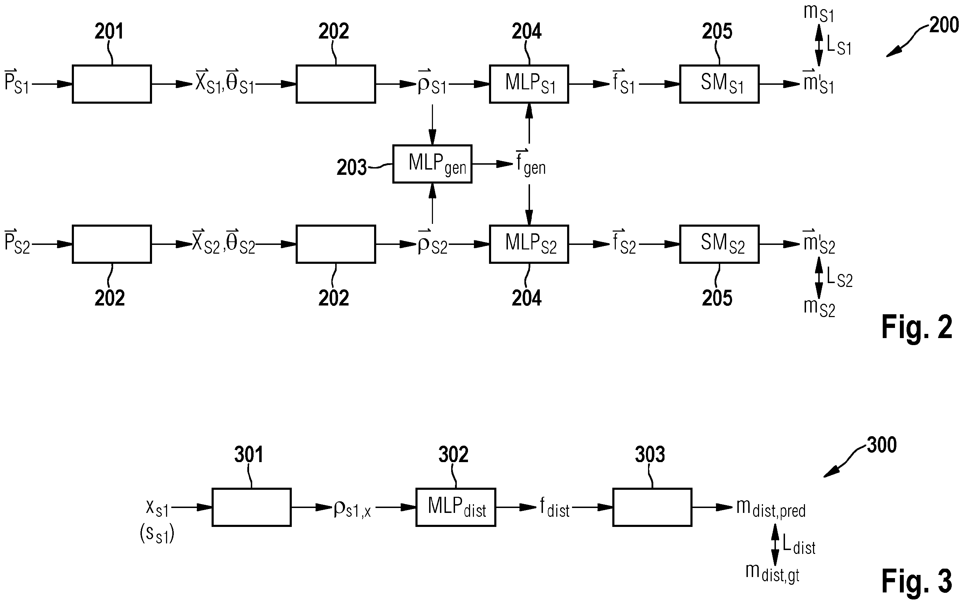

Figure 2 illustrates a multimodal NeRF 200 for the usage with two sensors s1, s2 of different sensor types.

Based on the sensor parameters pₛᵢ (i=1, 2), including extrinsic and intrinsic parameters, in particular the sensor position and field of vision (wherein "vision" may refer to other kinds of measurement that optical measurement depending on the sensor type), the 3D space of a given scene is discretized into ray segments, represented by their 3D locations xₛᵢ and viewing direction θₛᵢ. A respective sampler 201 samples from these ray segments, and the ray segment samples (i.e. samples of pairs of (xₛᵢ, θₛᵢ)) are encoded to an encoding ρₛᵢ by a respective encoder 202 (e.g. hash encoder) before being forwarded as input to a neural network comprising a general MLP (MLP_{gen}) 203 and, for each sensor type, a respective sensor-specific MLP (MLPₛᵢ) 204. Compared to the NeRF as originally introduced in reference 1, the MLP_{gen} 203 could be used to decode the density σ, whereas the sensor-specific MLP 204 could be used to decode the RGB values when applied to a camera sensor or the intensity for a LiDAR sensors.

The output of the MLP_{gen} 203 are general features f_{gen} which are used as additional input for the sensor-specific MLPs 204 whose output are sensor-specific features fₛᵢ. For each sensor type, the sensor-specific features fₛᵢ are further processed with a respective sensor model 205 to obtain sensor measurements m'ₛᵢ. For a camera sensor, this step is the pixel colour estimation based on the volumetric rendering equation.

It should be noted that a feature or features, an embedding and an encoding may be in form of a vector having multiple values.

In context of the above explanations, the multimodal NeRF 200 may correspond to the second NeRF. According to various embodiments, as explained above, another NeRF (first NeRF), which can be seen as feature embedding (or distillation) NeRF, also referred to as FD-NeRF, is trained jointly with the MM-NeRF. This first NeRF is trained to generate features like language embeddings (e.g. as generated by CLIP), DINO (self-distillation with no labels) features or a feature which indicates to which class of object a pixel belongs i.e. e.g. semantic logits.

Figure 3 illustrates a neural feature distillation NeRF (FD-NeRF) 300.

The input of the FD-NeRF 300 is a sampled sensor location xₛ₁ of sensor s1, assumed to be a camera in the following. It is also possible to use several sensor measurements or add several FD-NeRFs to the MM-NeRF. In the following, the description of the FD-NeRF 300 is based on the assumption that only the sampled locations xₛ₁, based on the parameters of the camera sensor s1 are used. This means that the viewing direction θs1 is not used as input for the FD-NeRF 300, since the distilled features should be view independent. A scale factor sₛ₁ can however be added to the input to define a 3D volume at the location xₛ₁ to learn multi-scale features. The input is encoded by an encoder 301, for example with a hash encoding, before passed to an MLP 302, referred to as MLP_{dist}. In training, MLP_{dist} 302 learns a mapping of the input to a feature vector f_{dist}. As mentioned above, the feature vector can be any kind of an embedding, for example a CLIP feature or a DINO feature, but also a vector of semantic logits (for multiple classes).

To obtain a final feature prediction m_{dist,pred} (for the input) a volumetric rendering 303 is applied. This is the same as in a NeRF as originally introduced in reference 1 for generating a picture but with the difference that the RGB values (which are "integrated" along the rays) are replaced by the values of the feature vector fdist.

In the present example relying on camera data, the rendering equation is based on the density, which may be predicted with the MLP_{gen} 203. For this, the MLP_{gen} 203 may be implemented in a viewing direction-independent manner or a certain viewing direction may be provided as input for the MLP_{gen} 203. A FD-NeRF 300 can also be trained for other sensor modalities. In that case, the rendering has to be adjusted using an appropriate sensor model.

As mentioned, the predicted features m_{dist,pred} can be of any kind. In the following the usage of the FD-NeRF 300 as autolabelling approach using CLIP features is described. After the training of the FD-NeRF 300 for the given scene, it is possible to sample 3D space locations xₛ₁ with a scale sₛ₁ and render the language embedding, i.e. determine the CLIP feature for this space location. This allows labelling all 3D space locations of the scene containing a density, i.e. all objects in the scene, based on a text query: the CLIP embedding of the text query and a set of canonical queries are computed and compared to the rendered CLIP embedding (i.e. the predicted CLIP features of the 3D locations). Using the similarity between the CLIP embedding based on the text query and the rendered CLIP embedding, a 3D relevance map can be computed. In addition, it is possible to extract (possibly multi-modal) measurements in the 3D space with a high relevance using the MM-NeRF 200. The extracted measurements, sampled on the location of this 3D relevance map can then be assigned with the text label (according to the text query), which leads to semantic labelled measurements. In addition, the 3D geometry can be assigned with this text label and 3D bounding boxes can be extracted.

So, sensor data which are not manually labelled can be auto-labelled and additional labelled sensor data may be generated.

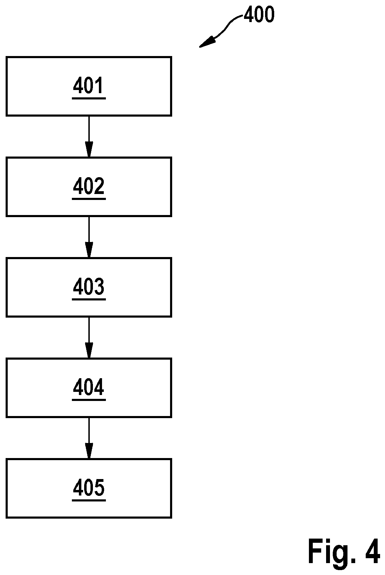

In summary, according to various embodiments, a method as illustrated in figure 4 is provided.

Figure 4 shows a flow diagram 400 illustrating a method for generating training data for an object detector.

In 401, a plurality of optical (i.e. visible light) images of a scene are received (e.g. recorded and then supplied to a data processing device), each camera showing the scene from a respective viewing direction of a plurality of different viewing directions (e.g. for different camera positions with respect to the scene).

In 402, a plurality of sensor data elements (which may also be seen as "further" sensor data elements, because the optical images can also be seen as sensor data elements) is received ((e.g. recorded and then supplied to a/the data processing device), each sensor data element including sensor data other than optical image data (i.e. other than the visible light camera images, i.e. of a different type than the optical images such as radar sensor data, LiDAR sensor data, ultrasonic or sonic sensor data, thermal image data etc.) of the scene from a respective sensing direction of a plurality of different sensing directions (e.g. for different positions of the respective sensor with respect to the scene).

In 403, a first neural radiance field is trained using the plurality of optical images to generate, for each 3D point of the scene, a respective value of a predetermined feature (e.g. classification value, language embedding, e.g. CLIP feature, DINO feature, wherein "value" can also refer to a vector in case the predetermined feature is vector-sized).

In 404, a second neural radiance field is trained using the plurality of sensor data elements to generate, for each 3D point of the scene (i.e. three-dimensional point of the scene, i.e. point in a three-dimensional space which contains the scene) a respective sensor data value (which may in particular be sensor data values of another sensor data type than optical image data).

In 405, a multiple training data elements for the object detector are generated by, for each training data element, generating a training input (e.g. a radar/LiDAR/etc. sensor data element) by means of the second neural radiance field and generating ground truth information for the training input (e.g. one or more ground truth object classes for parts of the sensor data element) by means of the first neural radiance field.

The approach of figure 4 can be used as an upstream part in a machine-learning tool chain: it allows generating training data for training an object detector as well as generate test data to check whether the trained object detector (or a device or system including it) can then be safely operated.

The output of the object detector can then be used to compute a control signal for controlling a technical system, e.g. robot device like e.g. a computer-controlled machine, a robot, a vehicle, a domestic appliance, a power tool, a manufacturing machine, a personal assistant or an access control system.

Various embodiments may receive and use sensor data from various sensors such as optical image, radar, LiDAR, ultrasonic, thermal imaging, motion, sonar etc., for the optical images and the (further) sensor data elements (which may also be in image form, i.e. have pixels associated with one or more pixel values for one or more channels).

The method of figure 4 may be performed by one or more data processing devices (e.g. computers or microcontrollers) having one or more data processing units. The term "data processing unit" may be understood to mean any type of entity that enables the processing of data or signals. For example, the data or signals may be handled according to at least one (i.e., one or more than one) specific function performed by the data processing unit. A data processing unit may include or be formed from an analogue circuit, a digital circuit, a logic circuit, a microprocessor, a microcontroller, a central processing unit (CPU), a graphics processing unit (GPU), a digital signal processor (DSP), a field programmable gate array (FPGA), or any combination thereof. Any other means for implementing the respective functions described in more detail herein may also be understood to include a data processing unit or logic circuitry. One or more of the method steps described in more detail herein may be performed (e.g., implemented) by a data processing unit through one or more specific functions performed by the data processing unit.

Accordingly, according to one embodiment, the method is computer-implemented.

## Claims

1. A method for generating training data for an object detector (108), comprising:
receiving (401) a plurality of optical images of a scene, each camera showing the scene from a respective viewing direction of a plurality of different viewing directions;
receiving (402) a plurality of sensor data elements, each sensor data element including sensor data other than optical image data of the scene from a respective sensing direction of a plurality of different sensing directions;
training (403) a first neural radiance field (300) using the plurality of optical images to generate, for each 3D point of the scene, a respective value of a predetermined feature;
training (404) a second neural radiance field (200) using the plurality of sensor data elements to generate, for each 3D point of the scene, a respective sensor data value; and
generating (405) multiple training data elements for the object detector (108) by, for each training data element, generating training input by means of the second neural radiance field (200) and ground truth information for the training input by means of the first neural radiance field (300).

2. The method of claim 1, wherein training the first neural radiance field (300) comprises determining values of the predetermined feature for pixels of the optical images and training the first neural radiance field (300) to determine values of the predetermined feature for the pixels.

3. The method of claim 2, comprising determining the values of the predetermined feature for the pixel by means of a (further) machine learning model.

4. The method of any one of claims 1 to 3, wherein the second neural radiance field (200) is trained using the plurality of sensor data elements to generate, for each 3D point of the scene and for each of a plurality of sensor data types, a respective sensor data value.

5. The method of any one of claims 1 to 4, wherein the predetermined feature is a text embedding.

6. A method for training an object detector (108) comprising:
generating training data according to any one of claims 1 to 5; and
training the object detector (108) using the generated training data.

7. A method for controlling a technical system comprising;
training an object detector (108) according to claim 6;
receiving sensor data of a scene in which the technical system is to be controlled;
performing object detection using the object detector (108); and controlling the technical system according to a result of the object detection.

8. A data processing device (105), configured to perform a method of any one of claims 1 to 7.

9. A computer program comprising instructions which, when executed by a computer, makes the computer perform a method according to any one of claims 1 to 7.

10. A computer-readable medium comprising instructions which, when executed by a computer, makes the computer perform a method according to any one of claims 1 to 7.
